# EUROPEAN PATENT APPLICATION

(11) **EP 4 572 431 A1**
(43) Date of publication of application: **18.06.2025**
(21) Application number: 23852853.3
(22) Date of filing: 01.08.2023
(51) Int. Cl.: H04W 52/34, H04W 52/14, H04W 52/32, H04W 52/36, H04W 52/42, H04W 52/54, H04W 72/21, H04W 72/232, H04W 8/24, H04B 7/0404

(54) **TRANSMISSION POWER CONTROL METHOD FOR SIMULTANEOUS TRANSMISSION ACROSS MULTIPLE PANELS IN WIRELESS COMMUNICATION SYSTEM AND APPARATUS THEREFOR**

(30) Priority: 09.08.2022 KR 20220099221; 18.01.2023 KR 20230007621; 01.02.2023 KR 20230013728
(71) Applicant: LG Electronics Inc., Yeongdeungpo-gu Seoul 07336 (KR)
(72) Inventor: KIM, Hyungtae, Seoul 06772 (KR); BAE, Duckhyun, Seoul 06772 (KR); YANG, Suckchel, Seoul 06772 (KR); KANG, Jiwon, Seoul 06772 (KR)
(74) Representative: Plasseraud IP
(86) International application number: PCT/KR2023/011244
(87) International publication number: WO 2024/034973

(57) **Abstract**

The present disclosure relates to a method comprises determining first transmission power of a first uplink channel and second transmission power of a second uplink channel; and transmitting the first uplink channel using the first transmission power using a first uplink grant and transmitting the second uplink channel to the BS using the second transmission power on the basis of a second uplink grant, wherein, if the first uplink channel and the second uplink channel are transmitted simultaneously, one of the first transmission power and the second transmission power is selected based on a first CORESET index associated with the first uplink grant and a second CORESET index associated with the second uplink grant, and the one selected transmission power is reduced such that the sum of the first transmission power and the second transmission power conforms to the maximum transmission power of the UE.

## Description

### TECHNICAL FIELD

The present disclosure relates to a wireless communication system and, more particularly, to a transmission power control method for Simultaneous Transmission across Multi-Panel (STxMP) in a wireless communication system and apparatus therefor.

### BACKGROUND

Wireless communication systems are being widely deployed to provide various types of communication services such as voice and data. In general, a wireless communication system is a multiple access system that can support communication with multiple users by sharing available system resources (bandwidth, transmission power, etc.). Examples of multiple access systems include code division multiple access (CDMA) systems, frequency division multiple access (FDMA) systems, time division multiple access (TDMA) systems, orthogonal frequency division multiple access (OFDMA) systems, and single carrier frequency division multiple access (SC-FDMA) systems.

### DISCLOSURE

### TECHNICAL PROBLEM

Hereinafter, a transmission power control method for Simultaneous Transmission across Multi-Panel (STxMP) in a wireless communication system and apparatus therefor will be described based on the above discussion.

It will be appreciated by those of ordinary skill in the art to which the embodiment(s) pertain that the objects that could be achieved with the embodiment(s) are not limited to what has been particularly described hereinabove and the above and other objects will be more clearly understood from the following detailed description.

### TECHNICAL SOLUTION

In an aspect of the present disclosure, provided herein is a method performed by a user equipment (UE) in a wireless communication system. The method includes: determining a first transmission power of a first uplink channel; determining a second transmission power of a second uplink channel; transmitting the first uplink channel to a base station (BS) with the first transmission power based on the first uplink grant; and transmitting the second uplink channel to the BS with the second transmission power based on the second uplink grant. The method includes: based on simultaneous transmission of the first uplink channel and the second uplink channel to the BS, selecting one transmission power from the first transmission power and the second transmission power based on a first control resource set (CORESET) index related to the first uplink grant and a second CORESET index related to the second uplink grant; and reducing the selected transmission power such that a sum of the first transmission power and the second transmission power complies with a maximum transmission power of the UE.

In another aspect of the present disclosure, provided herein is a UE. The UE includes: at least one transceiver; at least one processor; and at least one computer memory operably connected to the at least one processor and storing instructions that, when executed, cause the at least one processor to perform operations. The operations include: determining a first transmission power of a first uplink channel; determining a second transmission power of a second uplink channel; transmitting the first uplink channel to a BS with the first transmission power based on the first uplink grant; and transmitting the second uplink channel to the BS with the second transmission power based on the second uplink grant. The operations include: based on simultaneous transmission of the first uplink channel and the second uplink channel to the BS, selecting one transmission power from the first transmission power and the second transmission power based on a first CORESET index related to the first uplink grant and a second CORESET index related to the second uplink grant; and reducing the selected transmission power such that a sum of the first transmission power and the second transmission power complies with a maximum transmission power of the UE.

In another aspect of the present disclosure, provided herein is a processing device in a wireless communication system. The processing device includes: at least one processor; and at least one computer memory operably connected to the at least one processor and storing instructions that, when executed, cause the at least one processor to perform operations for a UE. The operations include: determining a first transmission power of a first uplink channel; determining a second transmission power of a second uplink channel; transmitting the first uplink channel to a BS with the first transmission power based on the first uplink grant; and transmitting the second uplink channel to the BS with the second transmission power based on the second uplink grant. The operations include: based on simultaneous transmission of the first uplink channel and the second uplink channel to the BS, selecting one transmission power from the first transmission power and the second transmission power based on a first CORESET index related to the first uplink grant and a second CORESET index related to the second uplink grant; and reducing the selected transmission power such that a sum of the first transmission power and the second transmission power complies with a maximum transmission power of the UE.

In another aspect of the present disclosure, provided herein is a computer-readable storage medium. The computer-readable storage medium stores at least one computer program including instructions that, when executed by at least one processor, cause the at least one processor to perform operations for a UE. The operations include: determining a first transmission power of a first uplink channel; determining a second transmission power of a second uplink channel; transmitting the first uplink channel to a BS with the first transmission power based on the first uplink grant; and transmitting the second uplink channel to the BS with the second transmission power based on the second uplink grant. The operations include: based on simultaneous transmission of the first uplink channel and the second uplink channel to the BS, selecting one transmission power from the first transmission power and the second transmission power based on a first CORESET index related to the first uplink grant and a second CORESET index related to the second uplink grant; and reducing the selected transmission power such that a sum of the first transmission power and the second transmission power complies with a maximum transmission power of the UE.

In each aspect of the present disclosure, when at least one of the first uplink grant and the second uplink grant is a type 1 configured grant (CG), a sounding reference signal (SRS) resource index related to a corresponding uplink grant is considered to be a CORESET index related to the corresponding uplink grant.

In each aspect of the present disclosure, when at least one of the first uplink grant and the second uplink grant is a type 2 CG, a CORESET index related to the type 2 CG is an index of a CORESET in which downlink control information including an activation indicator of the type 2 CG is received.

In each aspect of the present disclosure, among the first transmission power and the second transmission power, a transmission power of an uplink channel to be transmitted based on an uplink grant related to a higher CORESET index between the first CORESET index and the second CORESET index is selected.

In each aspect of the present disclosure, when the selected transmission power is reduced to a minimum transmission power, it is preferable to reduce the other transmission power.

The above solutions are only some of the examples of the disclosure, and various examples reflecting the technical features of the disclosure may be derived and understood from the following detailed description by those skilled in the art.

### ADVANTAGEOUS EFFECTS

According to the disclosure, wireless signal transmission and reception may be efficiently performed in a wireless communication system.

It will be appreciated by persons skilled in the art that the technical effects that could be achieved with the disclosure are not limited to what has been particularly described hereinabove and the above and other technical effects that the disclosure could achieve will be more clearly understood from the following detailed description.

### BRIEF DESCRIPTION OF THE DRAWINGS

The accompanying drawings are provided to help understanding of the embodiment, along with a detailed description. However, the technical features of the embodiment are not limited to a specific drawing, and features disclosed in each drawing may be combined with each other to constitute a new embodiment. Reference numerals in each drawing denote structural elements:
FIG. 1 illustrates physical channels used in a 3rd generation partnership project (3GPP) system, which is an example of wireless communication systems, and a general signal transmission method using the same.
FIG. 2 illustrates a radio frame structure.
FIG. 3 illustrates a resource grid of a slot.
FIG. 4 illustrates exemplary mapping of physical channels in a slot;
FIG. 5 illustrates an exemplary process of transmitting a physical downlink shared channel (PDSCH) and an acknowledgment/negative acknowledgment (ACK/NACK).
FIG. 6 illustrates an exemplary physical uplink shared channel (PUSCH) transmission process.
FIG. 7 illustrates an exemplary procedure for uplink transmission power control.
FIG. 8 is a flowchart illustrating a power control method when a user equipment (UE) performs Simultaneous Transmission across Multi-Panel (STxMP) according to the present disclosure.
FIG. 9 to FIG. 12 illustrate a communication system (1) and a wireless device applicable to the disclosure.

### DETAILED DESCRIPTION

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE. 3GPP NR (New Radio or New Radio Access Technology) is an evolved version of 3GPP LTE/LTE-A/LTE-A pro.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR).

While the disclosure is described mainly in the context of 3GPP NR for clarity of description, the technical idea of the disclosure is not limited to 3GPP NR.

In the specification, the expression "setting" may be replaced with the expression "configure/configuration", and the two may be used interchangeably. In addition, conditional expressions (e.g., "if ~~", "in a case ~~", "when ~~", or the like) may be replaced with the expression "based on that ~~" or "in a state/status ~~". Further, an operation of a user equipment (UE)/base station (BS) or an SW/HW configuration according to the satisfaction of the condition may be inferred/understood. Further, when a process of a receiving (or transmitting) side may be inferred/understood from a process of the transmitting (or receiving) side in signal transmission/reception between wireless communication devices (e.g., a BS and a UE), its description may be omitted. For example, signal determination/generation/encoding/transmission on the transmitting side may be understood as signal monitoring reception/decoding/determination on the receiving side. In addition, when it is said that a UE performs (or does not perform) a specific operation, this may also be interpreted as meaning that a BS operates expecting/assuming that the UE performs the specific operation (or expecting/assuming that the UE does not perform the specific operation). In addition, when it is said that a BS performs (or does not perform) a specific operation, this may also be interpreted as meaning that a UE operates expecting/assuming that the BS performs the specific operation (or expecting/assuming that the BS does not perform the specific operation). In addition, the identification and index of each section, embodiment, example, option, method, plan, or the like in the following description are for the convenience of description, and should not be interpreted as meaning that each forms an independent disclosure or that each should be implemented individually. In addition, unless there is an explicitly conflicting/opposing description in describing each section, embodiment, example, option, method, plan, or the like, it may be inferred/interpreted as meaning that at least some of them may be implemented together in combination, or they may be implemented with at least some of them omitted.

In a wireless communication system, a UE receives information through downlink (DL) from a BS and transmit information to the BS through uplink (UL). The information transmitted and received by the BS and the UE includes data and various control information and includes various physical channels according to type/usage of the information transmitted and received by the UE and the BS.

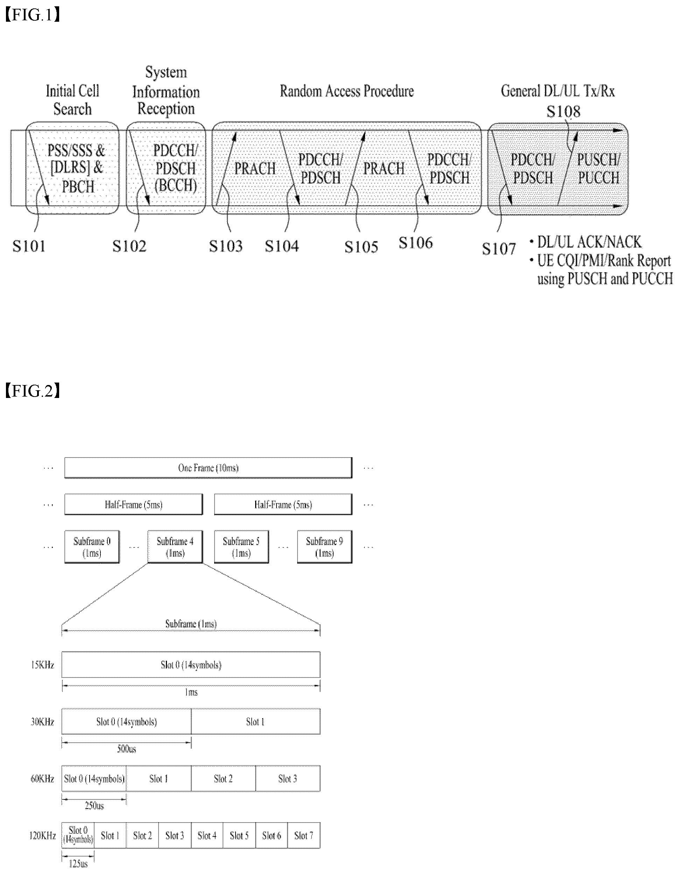

FIG. 1 is a diagram illustrating physical channels and a signal transmission method using the physical channels, in 3GPP NR system.

When powered on or when a UE initially enters a cell, the UE performs initial cell search involving synchronization with a BS in step S101. For initial cell search, the UE receives a synchronization signal block (SSB). The SSB includes a primary synchronization signal (PSS), a secondary synchronization signal (SSS), and a physical broadcast channel (PBCH). The UE synchronizes with the BS and acquires information such as a cell Identifier (ID) based on the PSS/SSS. Then the UE may receive broadcast information from the cell on the PBCH. In the meantime, the UE may check a downlink channel status by receiving a downlink reference signal (DL RS) during initial cell search.

After initial cell search, the UE may acquire more specific system information by receiving a physical downlink control channel (PDCCH) and receiving a physical downlink shared channel (PDSCH) based on information of the PDCCH in step S102.

Subsequently, to complete connection to the eNB, the UE may perform a random access procedure with the eNB (S103 to S106). In the random access procedure, the UE may transmit a preamble on a physical random access channel (PRACH) (S103) and may receive a PDCCH and a random access response (RAR) for the preamble on a PDSCH associated with the PDCCH (S104). The UE may transmit a physical uplink shared channel (PUSCH) by using scheduling information in the RAR (S105), and perform a contention resolution procedure including reception of a PDCCH signal and a PDSCH signal corresponding to the PDCCH signal (S106).

After the above procedure, the UE may receive a PDCCH and/or a PDSCH from the eNB (S107) and transmit a Physical Uplink Shared Channel (PUSCH) and/or a Physical Uplink Control Channel (PUCCH) to the eNB (S108), which is a general DL and UL signal transmission procedure. Particularly, the UE receives Downlink Control Information (DCI) on a PDCCH. Control information transmitted from a UE to an eNB is collectively referred to as uplink control information (UCI). The UCI includes a hybrid automatic repeat and request acknowledgement/negative-acknowledgment (HARQ ACK/NACK), a scheduling request (SR), channel state information (CSI), and so on. The CSI includes a channel quality indicator (CQI), a precoding matrix indicator (PMI), a rank indication (RI), and so on. Although the UCI is generally transmitted through a PUCCH, it may be transmitted through a PUSCH, when control information and traffic data should be transmitted simultaneously. In addition, the UCI may be transmitted aperiodically through a PUSCH by a request/indication of the network.

FIG. 2 illustrates the structure of a radio frame. The radio frame may be used for UL transmission and DL transmission in NR. A radio frame is 10 ms in length and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP). In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot N^{slot}_{symb}, the number of slots per frame *N^{frame,u}ₛₗₒₜ,* and the number of slots per subframe *N^{subframe,u}ₛₗₒₜ* according to an SCS configuration µ in the NCP case.

**[Table 1]**

| *u* | *N*^{slot}_{symb} | *N*^{frame,u}ₛₗₒₜ | *N*^{subframe,u}ₛₗₒₜ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

Table 2 below lists the number of symbols per slot N^{slot}_{symb}, the number of slots per frame *N^{frame,u}ₛₗₒₜ,* and the number of slots per subframe *N^{subframe,u}ₛₗₒₜ* according to an SCS configuration µ in the ECP case.

**[Table 2]**

| *u* | *N*^{slot}_{symb} | *N*^{frame,u}ₛₗₒₜ | *N*^{subframe,u}ₛₗₒₜ |
|---|---|---|---|
| 2 | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

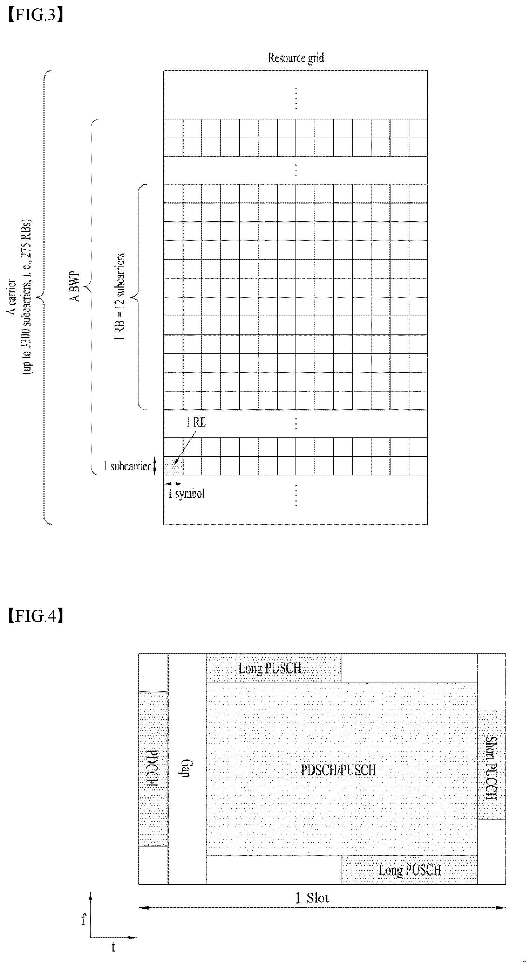

FIG. 3 illustrates an exemplary resource grid for the duration of a slot. A slot includes a plurality of symbols in the time domain. For example, one slot includes 14 symbols in a normal CP case, whereas one slot includes 12 symbols in an extended CP case. A carrier includes a plurality of subcarriers in the frequency domain. A resource block (RB) is defined as a plurality of (e.g., 12) contiguous subcarriers in the frequency domain. A bandwidth part (BWP) may be defined as a plurality of physical RBs (PRBs) in the frequency domain, and correspond to one numerology (e.g., an SCS, a CP length, or the like). A carrier may include up to N (e.g., 5) BWPs. Data communication may be performed in an active BWP, and only one BWP may be activated for one UE. Each element of a resource grid may be referred to as a resource element (RE) and mapped to one complex symbol.

FIG. 4 illustrates an example of mapping physical channels in a slot. A PDCCH may be transmitted in a DL control region, and a PDSCH may be transmitted in a DL data region. A PUCCH may be transmitted in a UL control region, and a PUSCH may be transmitted in a UL data region. A GP provides a time gap for switching from a transmission mode to a reception mode or switching from the reception mode to the transmission mode at the BS and the UE. Some symbols at a DL-to-UL switching time point within a subframe may be configured as a GP.

Each physical channel is described below in more detail.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g. a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH includes 1, 2, 4, 8, or 16 control channel elements (CCEs) according to an aggregation level (AL). A CCE is a logical allocation unit used to provide a PDCCH with a specific code rate according to a wireless channel state. A CCE includes six resource element groups (REGs). An REG is defined as one OFDM symbol and one (P)RB. The PDCCH is transmitted in a control resource set (CORESET). A CORESET is defined as an REG set having a given numerology (e.g., an SCS, a CP length, and so on). A plurality of CORESETs for one UE may overlap with each other in the time/frequency domain. The CORESET may be configured by system information (e.g., a master information block (MIB)) or UE-specific higher layer (e.g., radio resource control (RRC) layer) signaling. Specifically, the number of RBs and the number (up to 3) of OFDM symbols included in the CORESET may be configured by higher layer signaling.

For PDCCH reception/detection, the UE monitors PDCCH candidates. A PDCCH candidate represents CCE(s) that the UE should monitor for PDCCH detection. Each PDCCH candidate is defined as 1, 2, 4, 8, or 16 CCEs according to an AL. The monitoring includes (blind) decoding of the PDCCH candidates. A set of PDCCH candidates that the UE monitors are defined as a PDCCH search space (SS). The SS includes a common search space (CSS) or a UE-specific search space (USS). The UE may acquire DCI by monitoring PDCCH candidates in one or more SSs configured by an MIB or higher layer signaling. Each CORESET is associated with one or more SSs, and each SS is associated with one COREST. The SS may be defined based on the following parameters.
- controlResourceSetId: Indicates a CORESET associated with the SS
- monitoringSlotPeriodicityAndOffset: Indicates a PDCCH monitoring periodicity (in slots) and a PDCCH monitoring period offset (in slots)
- monitoringSymbolsWithinSlot: Indicates PDCCH monitoring symbols (e.g., the first symbol(s) of the CORESET) within the slot
- nrofCandidates: AL={1, 2, 4, 8, 16} indicates the number of PDCCH candidates (one of 0, 1, 2, 3, 4, 5, 6, and 8)

* An occasion (e.g., time/frequency resources) in which the PDCCH candidates are to be monitored is defined as a PDCCH (monitoring) occasion. One or more PDCCH (monitoring) occasions may be configured within a slot.

Table 3 illustrates characteristics of each SS type.

**[Table 3]**

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| UE Specific | UE Specific | C-RNTI, or MCS-C-RNTI, or CS-RNTI(s) | User specific PDSCH decoding |

Table 4 shows DCI formats transmitted on the PDCCH.

**[Table 4]**

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., dynamic SFI) to the UE, and DCI format 2_1 may be used to deliver DL pre-emption information to the UE. DCI format 2_0 and/or DCI format 2_1 may be transmitted to UEs within a group through a group common PDCCH, which is a PDCCH delivered to UEs defined as a group.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

The PDSCH carries DL data (e.g., a DL-SCH transport block (DL-SCH TB)), and modulation schemes such as quadrature phase shift keying (QPSK), 16 quadrature amplitude modulation (16 QAM), 64 QAM, 256 QAM, or the like is applied to the PDSCH. A TB is encoded to generate a codeword. The PDSCH may carry up to two codewords. Each codeword may be subject to scrambling and modulation mapping, and modulation symbols generated from the codeword may be mapped to one or more layers. Each layer is mapped to resources along with a demodulation reference signal (DMRS)), generated as an OFDM symbol signal, and transmitted through a corresponding antenna port.

The PUCCH carries UCI. The UCI includes the following.
- SR (Scheduling Request): Information used to request UL-SCH resources
- HARQ(Hybrid Automatic Repeat reQuest)-ACK(Acknowledgement): A response to a DL data packet (e.g., codeword) on a PDSCH. This indicates whether the DL data packet has been successfully received. One HARQ-ACK bit may be transmitted in response to a single codeword, and two HARQ-ACK bits may be transmitted in response to two codewords. The HARQ-ACK response includes a positive ACK (simply, ACK), a negative ACK (NACK), DTX, or NACK/DTX. HARQ-ACK is used interchangeably with HARQ ACK/NACK and ACK/NACK.
- CSI (Channel State Information): Feedback information for a DL channel. Multiple input multiple output (MIMO)-related feedback information includes an RI and a PMI.

Table 5 illustrates an example of PUCCH formats. Depending on PUCCH transmission durations, they may be classified into short PUCCH (Formats 0 and 2) and long PUCCH (Formats 1, 3 and 4).

**[Table 5]**

| PUCC H format | Length in OFDM symbols NPUCCHsym b | Number of bits | Usage | Etc |
|---|---|---|---|---|
| 0 | 1 - 2 | ≤2 | HARQ, SR | Sequence selection |
| 1 | 4 - 14 | ≤2 | HARQ, [SR] | Sequence modulation |
| 2 | 1 - 2 | >2 | HARQ, CSI, [SR] | CP-OFDM |
| 3 | 4 - 14 | >2 | HARQ, CSI, [SR] | DFT-s-OFDM (no UE multiplexing) |
| 4 | 4 - 14 | >2 | HARQ, CSI, [SR] | DFT-s-OFDM (Pre DFT OCC) |

PUCCH format 0 carries UCI of up to 2 bits, and is mapped to and transmitted based on a sequence. Specifically, the UE transmits one of a plurality of sequences through a PUCCH of PUCCH format 0 to transmit specific UCI to the BS. The UE transmits the PUCCH of PUCCH format 0 in PUCCH resources for a corresponding SR configuration, only when transmitting a positive SR.

PUCCH format 1 carries UCI of up to 2 bits, and modulation symbols are spread with an orthogonal cover code (OCC) (which is configured differently depending on whether frequency hopping is performed) in the time domain. A DMRS is transmitted in a symbol which does not carry modulation symbols (i.e., transmitted in time division multiplexing (TDM)).

PUCCH format 2 carries UCI of more than two bits, and modulation symbols are transmitted with a DMRS in frequency division multiplexing (FDM). The DMRS is located in symbol indexes #1, #4, #7 and #10 within a given RB with a density of 1/3. A pseudo noise (PN) sequence is used for a DMRS sequence. Frequency hopping may be activated for 2-symbol PUCCH format 2.

In PUCCH format 3, UEs are not multiplexed within the same PRB, and UCI with more than two bits is delivered. In other words, PUCCH resources of PUCCH format 3 do not include an OCC. A modulation symbol is transmitted with a DMRS in TDM.

PUCCH format 4 supports multiplexing of up to four UEs within the same physical RS and carries UCI with more than two bits. In other words, PUCCH resources of PUCCH format 3 include an OCC. A modulation symbol is transmitted with a DMRS in TDM.

At least one of one or more cells configured for the UE may be configured for PUCCH transmission. At least a primary cell may be configured as a cell for the PUCCH transmission. At least one PUCCH cell group may be configured for the UE based on the at least one cell configured for the PUCCH transmission, and each PUCCH cell group includes one or more cells. A PUCCH cell group may be simply referred to as a PUCCH group. The PUCCH transmission may be configured not only for the primary cell but also for an SCell, and the primary cell belongs to a primary PUCCH group, while the PUCCH-SCell configured for the PUCCH transmission belongs to a secondary PUCCH group. A PUCCH on the primary cell may be used for cells belonging to the primary PUCCH group, and a PUCCH on the PUCCH-SCell may be used for cells belonging to the secondary PUCCH group.

The PUSCH carries UL data (e.g., a UL-SCH TB) and/or UCI, and is transmitted based on a cyclic prefix-orthogonal frequency division multiplexing (CP-OFDM) waveform or a discrete Fourier transform-spread-orthogonal frequency division multiplexing (DFT-s-OFDM) waveform. When the PUSCH is transmitted based on the DFT-s-OFDM waveform, the UE transmits the PUSCH by applying transform precoding. For example, when transform precoding is impossible (e.g., transform precoding is disabled), the UE may transmit the PUSCH based on the CP-OFDM waveform, and when transform precoding is possible (e.g., transform precoding is enabled), the UE may transmit the PUSCH based on the CP-OFDM waveform or the DFT-s-OFDM waveform. PUSCH transmission may be dynamically scheduled by a UL grant in DCI or semi-statically scheduled based on higher layer (e.g. RRC) signaling (and/or layer 1 (L1) signaling (e.g. a PDCCH)). PUSCH transmission may be performed in a codebook-based or non-codebook-based manner.

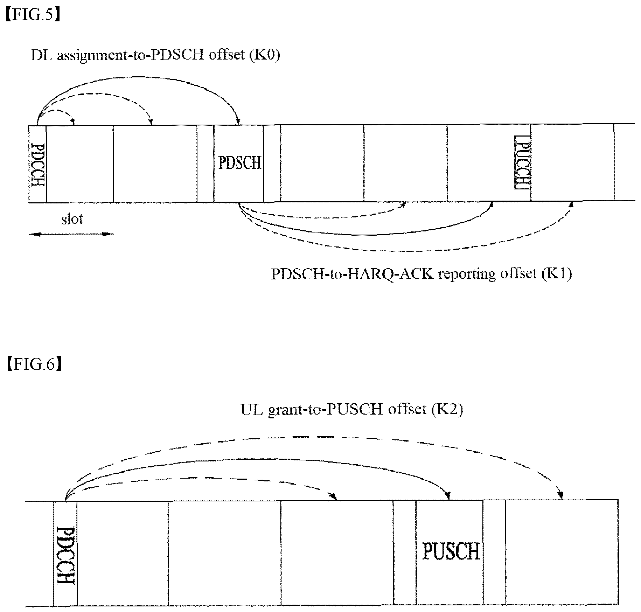

FIG. 5 illustrates an ACK/NACK transmission process. Referring to FIG. 5, the UE may detect a PDCCH in slot #n. The PDCCH includes DL scheduling information (e.g., DCI format 1_0 or DCI format 1_1). The PDCCH indicates a DL assignment-to-PDSCH offset, K0 and a PDSCH-to-HARQ-ACK reporting offset, K1. For example, DCI format 1_0 or DCI format 1_1 may include the following information.
- Frequency domain resource assignment: Indicates an RB set assigned to a PDSCH.
- Time domain resource assignment: Indicates K0 (e.g., a slot offset), the starting position (e.g., OFDM symbol index) of a PDSCH in slot #n+K0, and the length (e.g., the number of OFDM symbols) of the PDSCH
- PDSCH-to-HARQ_feedback timing indicator: Indicates K1.
- HARQ process number (4 bits): Indicates HARQ process identify (ID) for data (e.g., PDSCH or TB)
- PUCCH resource indicator (PRI): Indicates a PUCCH resource to be used for UCI transmission among a plurality of PUCCH resources in a PUCCH resource set

Subsequently, the UE may receive a PDSCH from slot #(n+K0) according to scheduling information in slot #n. Upon completion of the PDSCH reception in slot #n1 (where n+K0≤ n1), the UE may transmit UCI through a PUCCH in slot #(n1+K1). The UCI may include a HARQ-ACK response to the PDSCH. In FIG. 5, it is assumed for convenience that an SCS for the PDSCH and an SCS for the PUCCH are the same and slot# n1 = slot# n+K0, to which the disclosure is not limited. When the SCSs are different, K1 may be indicated/interpreted based on the SCS of the PUCCH.

When the PDSCH is configured to transmit up to one TB, the HARQ-ACK response may include one bit. When the PDSCH is configured to transmit up to two TBs, the HARQ-ACK response may include two bits in the case of not configuring spatial bundling, and include one bit in the case of configuring spatial bundling. When a HARQ-ACK transmission time for a plurality of PDSCHs is specified as slot #(n+K1), the UCI transmitted in slot #(n+K1) includes HARQ-ACK responses for the plurality of PDSCHs.

Whether the UE should perform spatial bundling for a HARQ-ACK response may be configured (e.g., by RRC/higher layer signaling) for each cell group. For example, spatial bundling may be individually configured for each HARQ-ACK response transmitted through a PUCCH and/or each HARQ-ACK response transmitted through a PUSCH.

When the maximum number of TBs (or codewords) receivable at one time (or schedulable by one DCI) in a corresponding serving cell is 2 (or larger) (e.g., when a higher layer parameter maxNrofCodeWordsScheduledByDCI corresponds to 2 TBs), spatial bundling may be supported. Meanwhile, more than 4 layers may be used for 2-TB transmission, and up to 4 layers may be used for 1-TB transmission. Consequently, when spatial bundling is configured for a corresponding cell group, spatial bundling may be performed for a serving cell for which more than 4 layers are schedulable among the serving cells of the cell group. On the serving cell, the UE that wants to transmit a HARQ-ACK response through spatial bundling may generate the HARQ-ACK response by performing a bitwise logical AND operation on A/N bits for a plurality of TBs.

For example, on the assumption that the UE receives DCI scheduling two TBs and receives the two TBs through a PDSCH based on the DCI, the UE performing spatial bundling may generate a single A/N bit by performing a logical AND operation on a first A/N bit for a first TB and a second A/N bit for a second TB. As a result, when both the first TB and the second TB are ACKs, the UE reports an ACK bit value to the BS, and when any one of the TBs is a NACK, the UE reports a NACK bit value to the BS.

For example, when only one TB is actually scheduled in a serving cell configured to receive two TBs, the UE may generate a single A/N bit by performing a logical AND operation on an A/N bit for the one TB and a bit value of 1. As a result, the UE reports the A/N bit for the one TB to the BS as it is.

There are a plurality of parallel DL HARQ processes for DL transmission in the BS/UE. The plurality of parallel HARQ processes allow DL transmission to be performed continuously while the BS waits for a HARQ feedback to successful or unsuccessful reception of a previous DL transmission. Each HARQ process is associated with a HARQ buffer of a medium access control (MAC) layer. Each DL HARQ process manages state variables such as the number of transmissions of a MAC physical data block (PDU) in a buffer, a HARQ feedback for the MAC PDU in the buffer, and a current redundancy version. Each HARQ process is identified by a HARQ process ID.

FIG. 6 illustrates an exemplary PUSCH transmission process. Referring to FIG. 6, the UE may detect a PDCCH in slot #n. The PDCCH may include UL scheduling information (e.g., DCI format 0_0 or DCI format 0_1). DCI format 0_0 and DCI format 0_1 may include the following information.
- Frequency domain resource assignment: Indicates an RB set allocated to a PUSCH.
- Time domain resource assignment: Specifies a slot offset K2 indicating the starting position (e.g., symbol index) and length (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

### QCL (quasi-co location)

When the channel properties of an antenna port may be derived from a channel of another antenna port, the two antenna ports are quasi co-located. The channel properties may include one or more of delay spread, Doppler spread, frequency/Doppler shift, average received power, received timing/average delay, and spatial RX parameter.

The UE may be configured with a list of a plurality of TCI-State configurations through a higher layer parameter, PDSCH-Config. Each TCI-State is associated with a QCL configuration parameter between one or two DL RSs and a DMRS port of a PDSCH. QCL may include qcl-Type1 for a first DS RS and qcl-Type2 for a second DL RS. A QCL type may correspond to one of the following types.
- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

### Beam Management (BM)

BM is a series of processes for acquiring and maintaining a set of BS (or transmission and reception point (TRP)) beams and/or UE beams available for DL and UL transmissions/receptions. BM may include the following processes and terminology.
- Beam measurement: The BS or the UE measures the characteristics of a received beamformed signal.
- Beam determination: The BS or the UE selects its transmission (Tx) beam/reception (Rx) beam.
- Beam sweeping: A spatial domain is covered by using Tx beams and/or Rx beams in a predetermined manner during a predetermined time interval.
- Beam report: The UE reports information about a beamformed signal based on a beam measurement.

The BM process may be divided into (1) a DL BM process using an SSB or a CSI-RS and (2) a UL BM process using a sounding reference signal (SRS). Further, each BM process may include Tx beam sweeping for determining a Tx beam and Rx beam sweeping for determining an Rx beam.

The DL BM process may include (1) transmission of a beamformed DL RS (e.g., a CSI-RS or SSB) from the BS, and (2) beam reporting from the UE.

The beam report may include preferred DL RS ID(s) and reference signal received power (RSRP) corresponding to the DL RS ID(s). A DL RS ID may be an SSB resource indicator (SSBRI) or a CSI-RS resource indicator (CRI).

### M-TRP (multi-transmission and reception point) transmission in NR Release 16

In NR Release 16, an S-DCI-based M-TRP PDSCH transmission method and an M-DCI-based M-TRP PDSCH transmission method are supported.
- S-DCI-based M-TRP PDSCH in NR Release 16

One of SDM, FDM, and TDM may be used by further dividing S-DCI-based M-TRP PDSCH transmissions. In the case of SDM, one TB is transmitted in multiple layers, but layers belonging to different DM-RS CDM groups are transmitted on different Tx beams, that is, with different QCL RSs or different TCI states. This may increase the number of layers compared to an existing S-TRP transmission method, thereby improving transmission capacity. Further, when one TB is transmitted in multiple layers, some layers are transmitted to TRP 1, and the other layers are transmitted to TRP 2, which may improve channel reliability by a diversity gain.

In the case of FDM, two schemes, scheme 2a and scheme 2b, are supported. In scheme 2a, a single TB is transmitted in multiple RBs, but RBs belonging to different RB groups are transmitted on different Tx beams (i.e., QCL RSs or TCI states). In scheme 2b, the same TB is transmitted in different RB groups, but RBs belonging to different RB groups are transmitted on different Tx beams (i.e., QCL RSs or TCI states).

In the case of TDM, two schemes, scheme 3 and scheme 4 are supported. In scheme 4 which is inter-slot TDM, the same TB is transmitted repeatedly in a plurality of slots, but slots belonging to different slot groups are transmitted on different Tx beams (i.e., QCL RSs or TCI states). On the contrary, in scheme 4 which is an intra-slot TDM, the same TB is repeatedly transmitted in multiple OFDM symbol groups, but some OFDM symbol groups and the remaining OFDM symbol groups are transmitted on different Tx beams (i.e., QCL RSs or TCI states).
- M-DCI-based M-TRP PDSCH in NR Release 16

M-DCI-based M-TRP PDSCH transmission is a method in which each TRP schedules and transmits a PDSCH through DCI. That is, TRP 1 transmits PDSCH 1 through DCI 1, and TRP 2 transmits PDSCH 2 through DCI 2. When PDSCH 1 and PDSCH 2 overlap on the same time and frequency resources, the two PDSCHs are received in the same RE, which increases resource efficiency and hence transmission capacity.

For this purpose, NR Release 16 introduces a CORESET pool, which is a group of several CORESETs. TRP 1 transmits a PDCCH in a CORESET belonging to CORESET pool 0, and also transmits a PDSCH scheduled by the PDCCH. TRP 2 transmits a PDCCH in a CORESET belonging to CORESET pool 1, and also transmits a PDSCH scheduled by the PDCCH. A specific TRP may schedule a PUSCH transmission for the UE through a CORESET belonging to each CORESET pool. UCI is received on a PUCCH in some PUCCH resources scheduled by TRP 1 and the remaining PUCCH resources scheduled by TRP 2. In the case of the PUSCH or the PUCCH, channels scheduled or used by the TRPs are TDMed with each other, hence with no overlap, from which a transmission capacity increase may not be expected. However, the UE may transmit an independent PUSCH/PUCCH to each of TRP 1 and TRP 2.

### M-TRP transmission in NR Release 17

NR Release 17 supports M-TRP PDCCH repeated transmission, M-TRP PDCCH/PDSCH SFN transmission, S-DCI-based M-TRP PUSCH repeated transmission, and single PUCCH resource-based M-TRP PUCCH repeated transmission.

In all of these transmission techniques, the same content (i.e., DCI, a UL TB, or UCI) is repeatedly transmitted with URLLC target enhancement for increased reliability. Repeated transmissions are performed in TDM or FDM in the case of M-TRP PDCCH repeated transmission, repeated transmissions are performed in the same time/frequency/layer in the case of M-TRP PDCCH/PDSCH SFN transmission, repeated transmissions are performed in TDM in the case of S-DCI-based M-TRP PUSCH repeated transmission, and repeated transmissions are performed in TDM in the case of single PUCCH resource-based M-TRP PUCCH repeated transmission.

### - S-DCI-based M-TRP PDCCH repeated transmission in NR Release 17

In NR Release 17, for M-TRP PDCCH repeated transmission, a plurality of CORESETs configured with different TCI states (i.e., different QCL RSs) are configured for the UE, and a plurality of SS sets connected to the CORESETs, respectively are configured. The BS indicates/configures linkage between an SS set connected to one CORESET and an SS set connected to another CORESET, for repeated transmission, to/for the UE, so that the UE may be aware that PDCCH candidates of the SS sets are repeatedly transmitted.

For example, two CORESETs, CORESET #0 and CORESET #1 may be configured for the UE and connected to SS sets #0 and #1, respectively, and SS set #0 and SS set #1 may be linked. The UE may be aware that the same DCI is repeatedly transmitted on a PDCCH candidate of SS set #0 and a PDCCH candidate of SS set #1, and through a specific rule, that the specific PDCCH candidate of SS set #0 and the specific PDCCH candidate of SS set #1 are a pair configured for repeated transmission of the same DCI. These two PDCCH candidates are referred to as linked PDCCH candidates, and when the UE successfully receives either of the two PDCCH candidates, the UE may successfully decode the DCI. However, when receiving the PDCCH candidate of SS set #0, the UE uses a QCL RS (i.e., DL beam) of the TCI state of CORESET #0 connected to SS set #0, and when receiving the PDCCH candidate of SS set #1, it uses a QCL RS (i.e., DL beam) of the TCI state of CORESET #1 connected to SS set #1, so that the UE receives the linked PDCCH candidates with different beams.

### - M-TRP SFN PDCCH in NR Release 17

As a special case of M-TRP PDCCH repeated transmission, multiple TRPs may repeatedly transmit the same DCI through the same time/frequency/DM-RS port, which may be called SFN PDCCH transmission. However, for SFN PDCCH transmission, the BS configures a plurality of TCI states for one CORESET rather than a plurality of CORESETs with different TCI states. When the UE receives a PDCCH candidate in an SS set connected to the one CORESET, it performs channel estimation on a PDCCH DM-RS and attempts to decode the PDCCH DM-RS using all of the plurality of TCI states.

### - M-TRP SFN PDSCH in NR Release 17

In the above M-TRP PDSCH repeated transmission, the two TRPs repeatedly transmit the corresponding channel in different resources. In a special case, however, when the two TRPs use the same resource, that is, even when the same channel is repeatedly transmitted in the same frequency, time, and layer (or DM-RS port), the reliability of the channel may be improved. In this case, the same channels that are repeatedly transmitted are combined on the air and received because their resources are not distinguished. Therefore, they are recognized as one channel from the receiver's perspective. In the NR standard, for PDSCH SFN transmission, two DL TCI states may be configured for PDSCH DM-RS reception.

### - S-DCI-based M-TRP PUSCH repeated transmission in NR Release 17

For S-DCI-based M-TRP PUSCH transmission, the BS configures two SRS sets for the UE, and the SRS sets are used to indicate UL transmission ports and UL beam/QCL information for TRP #1 and TRP #2, respectively. In addition, the BS may indicate SRS resources for the respective SRS sets by two SRI fields in one DCI, and indicate up to two power control (PC) parameter sets. For example, a first SRI field may indicate SRS resources and a PC parameter set defined for set 0, and a second SRI field may indicate SRS resources and a PC parameter set defined for set 1.

The UE receives the indication of a UL Tx port, a PC parameter set, and UL beam/QCL information for TRP #1 through the first SRI field, and performs PUSCH transmission in a TO corresponding to SRS set #0. Similarly, the UE receives the indication of a UL Tx port, a PC parameter set, and UL beam/QCL information for TRP #2 through the second SRI field, and performs PUSCH transmission in a TO corresponding to SRS set #1.

### - M-TRP PUCCH repeated transmission based on single PUCCH resource in NR Release 17

For M-TRP PUCCH transmission based on a single PUCCH resource, the BS activates/configures two spatial relation infos for the single PUCCH resource, for the UE, and when the UE transmits UCI in the PUCCH resource, the spatial relation infos are used to indicate spatial relation information for TRP #1 and TRP #2, respectively.

For example, the UE receives an indication of a Tx beam/PC parameter for TRP #1 through a value indicated by a first spatial relation info, and performs PUCCH transmission in a TO corresponding to TRP #1 using this information. Similarly, the UE receives an indication of a Tx beam/PC parameter for TRP #2 through a value indicated by a second spatial relation info, and performs PUCCH transmission in a TO corresponding to TRP #2 using this information.

In the Rel 17 standardization meeting, a configuration method was enhanced so that two spatial relation infos may be configured for a PUCCH resource, for M-TRP PUCCH repeated transmission. That is, when a PC parameter is set in each spatial relation info, a spatial relation RS may be configured. As a result, PC information and spatial relation RS information corresponding to two TRPs may be configured through the two spatial relation infos, and the UE transmits UCI in TO 1 through a PUCCH using the first spatial relation info, and transmits the same UCI (i.e., CSI, ACKNAK, SR) in TO 2 through the PUCCH using the second spatial relation info.

Hereinafter, a PUCCH resource configured with two spatial relation infos is referred to as an M-TRP PUCCH resource, and a PUCCH resource configured with one spatial relation info is referred to as an S-TRP PUCCH resource.

### Meaning of TCI state/beam indication

Using or mapping a specific TCI state (or TCI) when data/DCI/UCI is received in a certain frequency/time/spatial resource may mean that in DL, a channel is estimated from a DM-RS in the frequency/time/spatial resource, using a QCL type and QCL RS indicated by the DL TCI state, and data/DCI is received/demodulated based on the estimated channel.

In UL, it may mean that a DM-RS and data/UCI are transmitted/modulated in the frequency/time/spatial resource using a Tx beam and/or Tx power indicated by the UL TCI state.

A UL TCI state includes information about a Tx beam or Tx power for the UE, and the information may be configured for the UE by other parameters such as a spatial relation info, instead of the TCI state.

The UL TCI state may be directly indicated by DCI carrying a UL grant, or may mean a spatial relation info for an SRS resource indicated by an SRI field in the UL grant DCI. Alternatively, it may mean an open-loop Tx power control parameter linked to the value indicated by the SRI field in the UL grant DCI. Alternatively, a UL TCI may be indicated by the DL grant DCI.

For convenience of explanation, the methods proposed in the present disclosure will be described by assuming cooperation transmission/reception between two TRPs, but the methods may also be extended and applied to environments with three or more multiple TRPs and to multi-panel environments. Different TRPs may be recognized by the UE as different TCI states. When the UE uses TCI state 1 to transmit/receive data/DCI/UCI, it means that the UE transmits and receives the data/DCI/UCI with TRP 1.

In the present disclosure, a transmission occasion (TO) refers to each channel transmitted at different times when multiple channels are TDMed, each channel transmitted on different frequencies/RBs when multiple channels are frequency division multiplexed (FDMed), and/or each channel transmitted on different layers/beams/DM-RS ports when multiple channels are spatial division multiplexed (SDMed). Each TO is mapped to one TCI state. When the same channel is repeatedly transmitted, complete DCI/data/UCI is transmitted at one TO, and the receiver receives multiple TOs to improve the reception success rate.

### Uplink Transmission Power Control

In a wireless communication system, it may be necessary to increase or decrease the transmission power of the UE depending on the situation. Controlling the transmission power of the UE and/or mobile device is referred to as UL power control. For example, transmission power control may be applied to meet the requirements (e.g., signal-to-noise ratio (SNR), bit error ratio (BER), block error ratio (BLER), etc.) at the BS (e.g., gNB, eNB, etc.).

Power control may be performed using an open-loop power control method and a closed-loop power control method.

Specifically, the open-loop power control method refers to a method of controlling transmission power without feedback from the transmitting device (e.g., BS) to the receiving device (e.g., UE) and/or feedback from the receiving device to the transmitting device. For example, the UE receives a specific channel/signal (pilot channel/signal) from the BS and uses the channel/signal to estimate the strength of received power. Then, the UE may control transmission power using the estimated strength of the received power.

In contrast, the closed-loop power control method refers to a method of controlling transmission power based on feedback from the transmitting device to the receiving device and/or feedback from the receiving device to the transmitting device. For example, the BS receives a specific channel/signal from the UE, and based on the power level, SNR, BER, BLER, etc., measured from the received specific channel/signal, the BS determines the optimum power level for the UE. The BS then transmits information (i.e., feedback) about the determined optimum power level to the UE over a control channel, and the UE may use the feedback provided by the BS to control the transmission power thereof.

Hereinafter, power control methods when the UE performs UL transmission to the BS in a wireless communication system will be described. Specifically, the power control methods will be described for transmission of the following channels: 1) UL data channel (e.g., PUSCH), 2) UL control channel (e.g., PUCCH), 3) SRS, and 4) random access channel (e.g., PRACH).

In this case, a TO (i) for the PUSCH, PUCCH, SRS, and/or PRACH may be defined by a slot index (n_s) within a frame with a system frame number (SFN), a first symbol (S) within the slot, and the number of consecutive symbols (L).

### Priority for Uplink Transmission Power Control

Hereinafter, a method of controlling the transmission power of the UE will be described in consideration of single-cell operation in a carrier aggregation environment or single-cell operation in multi-UL carrier (e.g., two carriers) environment.

If the total UE transmission (or transmit) power of UL transmissions at each transmission occasion (i) exceeds the linear value of configured UE transmission (or transmit) power, the UE may be configured to allocate power to the UL transmission according to the priority order.

In this case, the priorities for transmission power control may be configured or defined in the following order.
- PRACH transmission on primary cell (PCell)
- PUCCH for hybrid automatic repeat and request-acknowledgement (HARQ-ACK) information and/or scheduling request (SR) or PUSCH for HARQ-ACK information
- PUCCH or PUSCH for channel state information (CSI)
- PUSCH for neither HARQ-ACK information nor CSI
- SRS transmission or PRACH transmission in serving cell other than PCell (however, an aperiodic SRS has a higher priority than a semi-persistent SRS and/or periodic SRS)

The UE may control the total transmission power to be less than or equal to the linear value of the configured UE transmission power in each symbol of the transmission occasion (i) based on the power allocation according to the priority order as described above. For example, to this end, the UE may be configured to scale and/or drop the power of UL transmission with a low priority. In this case, details of scaling and/or dropping may be configured or defined according to UE implementation.

As a specific example, for transmissions with the same priority in carrier aggregation, the UE may assume that transmission in a Pcell has a higher priority than transmission in a secondary cell (Scell). Additionally/alternatively, for transmissions with the same priority in multiple UL carriers (e.g., two UL carriers), the UE may assume a carrier on which PUCCH transmission is configured to have a high priority. In addition, if PUCCH transmission is not configured on any carriers, the UE may assume that transmission on a non-supplementary UL carrier has a high priority.

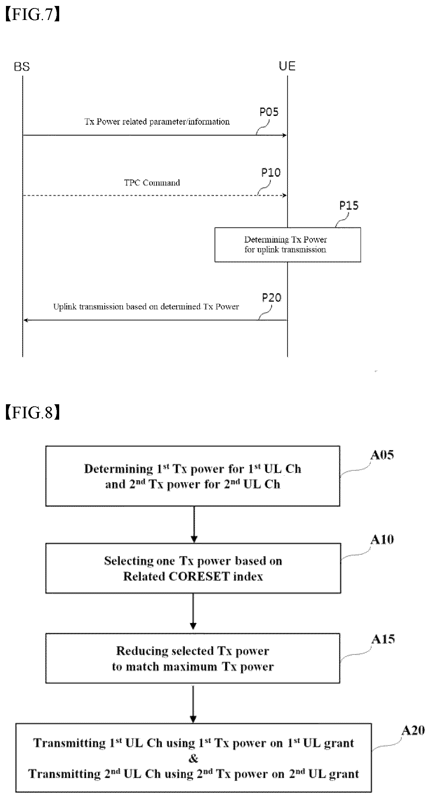

FIG. 7 illustrates an exemplary procedure for UL transmission power control.

Referring to FIG. 7, the UE may receive parameters and/or information related to transmission power (Tx power) from the BS (P05). In this case, the UE may receive the corresponding parameters and/or information through higher layer signaling (e.g., RRC signaling, MAC-CE, etc.).

Subsequently, the UE may receive a TPC command related to transmission power from the BS (P10). In this case, the UE may receive the corresponding TPC command through lower layer signaling (e.g., DCI). For example, for PUSCH transmission, PUCCH transmission, and/or SRS transmission, the UE may receive information on a TPC command to be used for determining the power control adjustment state through a TPC command field of a predefined DCI format as described above. However, the corresponding step may be omitted in PRACH transmission.

Thereafter, the UE may determine (or calculate) transmission power for UL transmission based on the parameters, information, and/or TPC command received from the BS (P15). Additionally/alternatively, when two or more UL channels and/or signals need to be transmitted together as in carrier aggregation, the UE may determine the transmission power for UL transmission in consideration of the above-described priority order.

The UE may perform transmission of one or more UL channels and/or signals (e.g., PUSCH, PUCCH, SRS, PRACH, etc.) to the BS based on the determined (or calculated) transmission power (P20).

### STxMP (Simultaneous Transmission across Multi-Panel)

In NR Release 18, a method of simultaneously transmitting multiple channels/RSs of the same type or multiple channels/RSs of different types by a UE is under discussion. For conventional UEs, the operation of transmitting multiple channels/RSs at one time is limited. For example, it is possible to simultaneously transmit multiple SRS resources in different SRS sets for UL beam measurement, but transmitting multiple PUSCHs simultaneously is not possible.

However, for advanced UEs discussed in NR Release 18, these limitations are relaxed, thereby allowing the use of multiple transmission panels to simultaneously transmit multiple channels or RSs. Such a UE is referred to as an STxMP UE. For example, two PUSCHs corresponding to two UL TBs are scheduled on the same RE, and for transmission of PUSCH 1 and PUSCH 2, spatial relation RS 1 and power control (PC) parameter set 1 (i.e., UL TCI state 1) and spatial relation RS 2 and PC parameter set 2 (i.e., UL TCI state 2) are configured. The UE uses panel 1 corresponding to UL TCI state 1 to transmit PUSCH 1 and simultaneously uses panel 2 corresponding to UL TCI state 2 to transmit PUSCH 2.

When the BS schedules a PUSCH through DCI, the BS may indicate whether the PUSCH is to be transmitted in the STxMP mode, transmitted with a single panel, or transmitted based on M-TRP PUSCH repetition. The UE needs to have STxMP capabilities, and the STxMP mode should be made available in advance through RRC signaling. To achieve this, an existing SRS resource set indicator field may be redefined, or a new DCI field may be introduced.

### Transmission Power Control Method for STxMP Transmission

The present disclosure proposes a transmission power control method when UL channels, such as a PUSCH/PUCCH/SRS, transmitted simultaneously by an STxMP UE are partially overlapped in the time domain. When STxMP UL transmission is scheduled with a single DCI, UL channels do not partially overlap in the time domain. However, when STxMP UL transmission is scheduled with multiple DCIs, UL channels may frequently overlap partially in the time domain.

Although the following examples primarily focus on the case of scheduling with multiple DCIs, the proposed methods may also be extended and applied to cases where UL channels are partially overlapped in the time domain, even with a single DCI, depending on the transmission method. In particular, for scheduling with a single DCI, dynamic information exchange between the two TRPs is possible, and thus an ideal backhaul case may be considered regarding the proposed methods below.

In 3GPP NR standard release 16, for (multi-DCI-based) M-DCI-based M-TRP, UL channels scheduled in different CORESET pools (i.e., different TRPs) should be scheduled at different times. However, in 3GPP NR standard release 18, with the introduction of STxMP UEs, since the UE may simultaneously transmit two UL channels/RSs (e.g., PUSCH/PUCCH) through each panel, UL channels scheduled in different CORESET pools (i.e., different TRPs) may be transmitted simultaneously, even if the UL channels overlap in the time domain.

For example, when PUSCH 0 is scheduled from OFDM symbol 0 to symbol 4 in CORESET pool 0 (i.e., TRP1), and PUSCH 1 is scheduled from OFDM symbol 2 to symbol 6 in CORESET pool 1 (i.e., TRP2), the STxMP UE may transmit PUSCH 0 using panel 0 only in OFDM symbols 0 and 1, transmit both PUSCH 0 and PUSCH 1 using panel 0 and panel 1 in OFDM symbols 2 to 4, and transmit PUSCH 1 using panel 1 only in OFDM symbols 5 and 6. In OFDM symbols 2 to 4 where the two PUSCHs overlap in the time domain, the UE may perform STxMP using panel 0 and panel 1. If the power control for each PUSCH in the region is performed according to the conventional method, the transmission power may exceed the value of Pc_max.

For example, if the transmission power of each of PUSCH 0 and PUSCH 1 is Pc_max, the total transmission power may be 2 * Pc_max, which exceeds Pc_max. On the other hand, for OFDM symbols 0, 1, 5, and 6 where there is no overlap in the time domain, the UE transmits a single PUSCH using a single panel. In this case, even if the transmission power of each of PUSCH 0 and PUSCH 1 is Pc_max, the total transmission power may not exceed Pc_max. In other words, for two PUSCHs scheduled in different CORESET pools (or even from a single CORESET pool), if the two PUSCHs partially overlap in the time domain, it is desirable to apply different power control methods for overlapping and non-overlapping regions in the time domain.

For convenience of explanation, the proposed methods have been described based on a PUSCH, but the methods may be equally applied to a PUCCH/SRS.

Hereinafter, the methods will be described for two cases: a case where two CORESET pools (i.e., two TRPs) are connected via a non-ideal backhaul with no dynamic information exchange, and a case where two CORESET pools are connected via an ideal backhaul with dynamic information exchange. The BS may determine which method to use between the proposed methods for non-ideal and ideal backhaul cases based on the backhaul conditions of the BS. The BS may indicate the determined method to the UE through RRC signaling.

### <Non-Ideal Backhaul Case>

In the non-ideal backhaul case, two TRPs may not exchange information on dynamically scheduled UL channels. Therefore, TRP 1 (i.e., a TRP scheduling using CORESET pool 0) may not know whether a UL channel scheduled by TRP 1 overlaps in the time domain with a UL channel scheduled by TRP 2 (i.e., a TRP scheduling using CORESET pool 1). Similarly, TRP 2 also may not know whether the UL channel scheduled by TRP 2 overlaps in the time domain with the UL channel scheduled by TRP 1.

Therefore, each TRP should conservatively perform power control for the UL channel thereof by assuming the worst-case scenario where the UL channel overlaps with the UL channel of another cooperating TRP. In other words, although it is uncertain whether the UL channels will overlap, even if the channels overlap, TRP 1 should assume that the maximum transmission power for the UL channel that TRP 1 schedules is Pc_max (or Pc_max_common) * alpha (e.g., 1/2) to ensure that the total transmission power of the UE does not exceed Pc_max (or Pc_max_common). The final transmission power for PUSCH 0 is determined as the smaller value between the calculated transmission power for PUSCH 0 and Pc_max * alpha (or Pc_max_common * alpha).

Similarly, power control is performed by assuming that the maximum transmission power of the UL channel scheduled by TRP 2 is Pc_max (or Pc_max_common) * (1-alpha). Thus, the final transmission power for PUSCH 1 is determined as the smaller value between the calculated transmission power for PUSCH 1 and Pc_max * (1-alpha) (or Pc_max_common * (1-alpha)).

In the above example, the scaling values applied to panel 0 and panel 1 are assumed to be alpha and 1-alpha, respectively. However, it is also possible to assume the same alpha for both panels.

The alpha value may be indicated by the BS to the UE, or the alpha value may be indicated by the UE to the BS. Alternatively, considering the possibility that all UL channels scheduled in each pool may overlap, alpha may be set as 1/(the number of CORESET pools) or 1/(the number of panels where simultaneous transmission is possible), or alpha may be set as min(1/ the number of CORESET pools, 1/the number of panels where simultaneous transmission is possible).

### <Ideal Backhaul Case>

In the ideal backhaul case, two TRPs may exchange information on dynamically scheduled UL channels. Therefore, TRP 1 (i.e., a TRP scheduling using CORESET pool 0) may know whether a UL channel scheduled by TRP 1 overlaps partially in the time domain with a UL channel scheduled by TRP 2 (i.e., a TRP scheduling using CORESET pool 1). Similarly, TRP 2 may also know whether the UL channel scheduled by TRP 2 overlaps partially in the time domain with the UL channel scheduled by TRP 1. As a result, each TRP may distinguish between overlapping symbol sets and non-overlapping symbol sets for the UL channel that the TRP transmits and apply different power control methods to the overlapping symbol sets and non-overlapping symbol sets. The UE should also distinguish between the overlapping and non-overlapping symbol sets for the UL channels and apply different power control methods.

For the non-overlapping symbol sets, an existing power control method may be applied as it is.

For the overlapping symbol sets, the power control method proposed in the non-ideal backhaul case may be applied as it is. As a result, the total transmission power of each panel may always satisfy the condition of being less than or equal to Pc_max (or Pc_max_common).

Alternatively, if the sum of the transmission powers of the two panels exceeds Pc_max (or Pc_max_common), the transmission power of each panel may be readjusted to ensure that the total transmission power does not exceed Pc_max (or Pc_max_common). The transmission powers of some or all panels may be scaled down. For example, if scaling down is applied only to one of the panels (if predefined panel priorities exist, and for the sake of convenience, this panel is referred to as panel 2, which has the lower priority), the transmission power of panel 2 may be scaled down by multiplying the transmission power of panel 2 with the value of [(Pc_max_common - transmission power of panel 1) / transmission power of panel 2]. Alternatively, it is also possible to subtract a calculated power offset from the transmission powers of some or all panels.

When the sum of the transmission powers of the two panels exceeds Pc_max (or Pc_max_common), if the transmission power of each panel is readjusted to ensure that the total transmission power does not exceed Pc_max (or Pc_max_common), the following are proposed to determine a panel of which the transmission power needs to be reduced first.

First Proposal - The transmission power of a UL channel scheduled by a specific CORESET pool or specific TRP is reduced first. For example, if CORESET pool 0 and CORESET pool 1 schedule PUSCH 0 and PUSCH 1, respectively, the transmission power of PUSCH 1 with the lower priority is reduced first. This ensures that one TRP has priority over the other in terms of UL transmission power allocation.

Second Proposal - When a PUSCH including UCI (e.g., PUSCH 0) and a PUSCH with only data (e.g., PUSCH 1) are transmitted based on STxMP, the transmission power of PUSCH 1 is reduced first. This ensures that UCI has priority over UL TBs in terms of UL transmission power allocation. If two UL channels (PUSCH or PUCCH) include UCI, the first proposal described above may be applied to determine the priority for UL transmission power allocation.

Third Proposal - The priority for UL transmission power allocation is determined based on the UCI types of two UL channels being transmitted based on STxMP. For example, the UL transmission power allocation priority is determined as follows: ACK/NACK (highest priority) > SR > CSI (lowest priority). If the priority is the same, the first proposal may be applied to determine the UL transmission power allocation priority.

Additionally, even for the same UCI type (i.e., ACK/NACK, SR, or CSI), the priority may be determined as follows to perform the UL transmission power allocation.

For example, according to the current 3GPP NR standard release 16, the priority between ACK/NACK types is configured as follows. For a single cell, the UE is configured with a PUCCH configuration list, and within the PUCCH configuration list, two PUCCH configurations (e.g., PUCCH configuration 1 and PUCCH configuration 2) may be configured. For each PUCCH configuration, an independent ACK/NACK codebook type may be configured, and an independent PUCCH resource may also be configured. If an ACK/NACK is transmitted based on the codebook type and PUCCH resource configured for PUCCH configuration 1, the ACK/NACK is considered as a priority 0 ACK/NACK. On the other hand, if an ACK/NACK is transmitted based on the codebook type and PUCCH resource configured for PUCCH configuration 2, the ACK/NACK is considered as a priority 1 ACK/NACK, which has a higher priority than the priority 0 ACK/NACK. Thus, when a PUCCH or PUSCH including ACK/NACK priority 1 and a PUCCH or PUSCH including ACK/NACK priority 0 are transmitted based on STxMP, the transmission power of the PUCCH or PUSCH including ACK/NACK priority 0 is reduced first.

In the case of an SR, multiple SR resource configurations may be configured within a PUCCH configuration (the first PUCCH configuration if there are multiple PUCCH configurations), and within each SR resource configuration, a low/high (i.e., 2-level) priority may be indicated by phy-PriorityIndex-r16. For CSI, the priorities are also distinguished as specified in Clause 5.2.5 of 3GPP NR 38.214.

For the priority of the SR or ACK/NACK, the BS may prioritize an SR or ACK/NACK for URLLC data with a higher priority, while the BS may assign a lower priority for data that is not related to URLLC.

Fourth Proposal - A panel of which the PUSCH transmission power is reduced first is determined using the scheduling priority index of the PUSCH. For DCI format 0_2, a 1-bit priority indicator may be configured. Using the 1-bit priority indicator, the BS may indicate to the UE the priority of a PUSCH scheduled by the DCI. In particular, if there is no priority indicator within the DCI, the PUSCH may be assumed to have a lower priority. Accordingly, the transmission power of the panel with the lower-priority PUSCH is reduced first.

The first to fourth proposals may be applied in combination. For example, one proposal may be applied first, and if the priorities are not identified with the proposal, another proposal may be applied to identify the priorities.

In the above proposal, if the UL channel transmission power of a specific panel is reduced first, the transmission power of the panel may become 0. In this case, since STxMP is not allowed, a minimum transmission power value m for each panel may be introduced to perform STxMP. That is, the transmission power of a lower-priority panel is reduced to no less than the minimum value m. Even after the transmission power of the lower-priority panel is reduced to the minimum value m, if the sum of the transmission powers of two panels exceeds Pc_max (or Pc_max_common), the transmission power of a higher-priority panel is reduced further.

In the above proposal, different power control methods are applied to non-overlapping and overlapping symbol sets. As a result, there is an implementation burden on the UE to perform symbol-level power control. Therefore, UEs capable of symbol-level power control and UEs incapable of symbol-level power control may be distinguished, and each UE may report this capability as a UE capability. For UEs incapable of symbol-level power control, the power control method applied to overlapping symbol sets may be applied to non-overlapping symbol sets as well.

Hereinabove, the four proposals have been described to determine a panel of which the transmission power needs to be reduced first. Hereinafter, it will be described how to determine priorities based on the number of repetitions of a channel transmitted on a panel. For example, if a PUSCH on panel 0 is not repeated (i.e., the number of repetitions is 1), and a PUSCH on panel 1 is repeated (i.e., the number of repetitions > 1), the transmission power of the repeated PUSCH is reduced first. In the case of the repeated PUSCH, the PUSCH may be transmitted alone in other repetition transmission occasions where there is no overlap in the time domain. For example, when a PUSCH is repeated four times, if a first PUSCH is transmitted in the STxMP mode, the remaining three repetitions of the transmission may be performed on a single panel. Therefore, for a PUSCH with no repetition, since there is only one transmission occasion, it is preferable to allocate a transmission power to the PUSCH first.

The above operation may be generalized as follows. The transmission power of a PUSCH with a larger number of repetitions may be reduced first. Alternatively, the transmission power of a PUSCH with a smaller number of repetitions may be reduced first. If the number of repetitions of a channel is higher, it is preferable to assign a higher transmission power priority to the channel because the channel needs to achieve higher reliability. However, for repetition transmission occasions where there is an overlap in the time domain, the transmission powers thereof need to be reduced, while for repetition transmission occasions with no overlap in the time domain, transmission is carried out without reducing the transmission powers thereof according to the existing method.

In the proposed ideal backhaul case, the priority determination method may be applied directly to determine a panel where the transmission power needs to be reduced first. For example, transmission power allocation priorities applied to a carrier aggregation (CA) environment may be applied as STxMP power allocation priorities. Similarly, since it is also specified that priorities are considered when UL channels are selected, the priorities may be used directly to determine the transmission power allocation priorities for STxMP. However, in the case of STxMP, multiple channels may be transmitted simultaneously across multiple panels. Therefore, instead of selecting one channel and dropping the other channels as in the prior art, multiple channels are selected and transmitted simultaneously with allocated transmission powers.

### <Power Control Method for CG PUSCH STxMP Transmission>

In 3GPP NR standard release 15, only one configured grant (CG) PUSCH may be configured for each cell. However, from 3GPP NR standard release 16, multiple CG PUSCHs may be configured for each cell, and the type of each CG PUSCH may be configured differently. In this case, symbols assigned to different CG PUSCHs may overlap in the time domain. UEs without STxMP capability may select only one of the multiple CG PUSCHs for transmission, and the other CG PUSCHs may not be transmitted. According to 3GPP NR TS 38.213, for two CG PUSCHs with different priority indices, a CG PUSCH with a higher priority index is transmitted.

Additionally, two methods for determining a CG PUSCH to be selected are described in 3GPP NR TS 38.321. The first method depends on the UE implementation. That is, the UE selects one CG PUSCH. According to the second method, the BS informs the UE of priorities based on the data type of PUSCH TB, and the UE selects a CG PUSCH according to the priorities. The data type is determined based on the type of TB created at the MAC layer, which is different from CG PUSCH type 1 and CG PUSCH type 2. Therefore, PUSCH type 1 may have a higher priority than PUSCH type 2, or vice versa.

For a CG PUSCH, a potential UL TB may or may not exist in symbols scheduled with pre-allocated resources for the potential UL TB. Therefore, the BS should perform blind detection (BD) to determine whether the CG PUSCH is transmitted. From the perspective of transmission power allocation, the BS may interpret whether the UE transmits a PUSCH with the transmission power calculated according to pre-defined rules or with zero transmission power by performing BD.

Considering the characteristics of the CG PUSCH, regardless of whether the connection between two TRPs (or two cells) corresponding to two CORESET pools is an ideal backhaul or not, one TRP may not know whether the CG PUSCH scheduled by the other TRP is actually transmitted. Therefore, it is preferable to assume the worst-case scenario such as a non-ideal backhaul and consider that the other TRP is transmitting the CG PUSCH in CG PUSCH symbols of the corresponding TRP. In other words, regardless of whether the backhaul is ideal or non-ideal, the method proposed for the non-ideal backhaul case needs to be applied.

Alternatively, when there is an overlap between CG PUSCH symbols, power control may be performed using the method proposed for the ideal backhaul case. In this case, the priority indices configured for CG PUSCHs may be compared, and the transmission power of a CG PUSCH with a smaller index (i.e., lower priority) may be reduced first. Alternatively, based on the priority selection method defined in the existing standards for CG PUSCHs, a CG PUSCH of which the transmission power needs to be reduced first may be selected.

Alternatively, CG PUSCH type 2 may be considered to have a higher priority than CG PUSCH type 1, and the transmission power of CG PUSCH type 1 may be reduced first. Since CG PUSCH type 2 is activated via DCI and may be considered to have a more recent scheduling time compared to CG PUSCH type 1, the transmission priority and power allocation priority for the type 2 CG PUSCH may be set higher than that of the type 1 CG PUSCH. Conversely, CG PUSCH type 1 may be processed with a higher priority than CG PUSCH type 2, and the transmission power of CG PUSCH type 2 may be reduced first.

Here, the TRP may be replaced with a serving cell. Alternatively, the TRP may correspond to a CORESET pool index. TRP 0 and TRP 1 may be expressed as CORESET pool 0 and CORESET pool 1, respectively. The PUSCH of CORESET pool x refers to a PUSCH of which scheduling DCI or activation DCI is set to CORESET pool x. The type 1 CG PUSCH refers to a type 1 CG PUSCH where SRS resource set index x is configured in ConfiguredGrantConfig.

### <Power Control Method for STxMP Transmission of CG PUSCH and DG PUSCH>

According to the current NR standard, when the symbols of a CG PUSCH and the symbols of a dynamic grant (DG) PUSCH overlap in a single cell, the DG PUSCH is transmitted, and the CG PUSCH is not transmitted. However, if the priority indices of the DG PUSCH and CG PUSCH are different, the PUSCH to be transmitted is selected based on the priority indices. For example, if the priority index of the CG PUSCH is higher than that of the DG PUSCH, the CG PUSCH may be transmitted, and the DG PUSCH may not be transmitted.

According to the current NR standard, in a CA environment, when the symbols of a DG PUSCH from one cell overlap with the symbols of a CG PUSCH from another cell, a transmission power may be allocated to a channel with a higher priority index, while the remaining channel may be transmitted with the remaining transmission power or not transmitted at all. In other words, the transmission power allocation for the remaining channel is determined based on the UE implementation.

In the case of an ideal backhaul, the power control method proposed for the ideal backhaul case may be applied, and the transmission power of a channel with a lower priority index may be reduced first. If the priority indices are the same, the transmission power of the CG PUSCH needs to be reduced first. For the DG PUSCH, since the scheduling time for the DG PUSCH is considered to be more recent compared to the CG PUSCH, the transmission priority and transmission power allocation priority for the DG PUSCH may be set higher than those for the CG PUSCH. Alternatively, the CG PUSCH may be processed with a higher priority than the DG PUSCH, and the transmission power of the DG PUSCH may be reduced first.

On the other hand, a type 1 CG PUSCH is not directly connected to a CORESET pool index, but is connected to an SRS resource set index. Therefore, whether there is an overlap between type 1 CG PUSCHs transmitted by different TRPs or between type 1 CG PUSCHs transmitted by the same TRP may be determined by the SRS resource set index related to the PUSCH. In this case, in the method of allocating a transmission power or determining the priority for transmission power allocation using the CORESET pool index, the CORESET pool index may be replaced with the SRS resource set index when applied to the type 1 CG PUSCH. When a DG PUSCH or type 2 CG PUSCH overlaps with the type 1 CG PUSCH, SRS resource set index 0 related to the type 1 CG PUSCH is interpreted as corresponding to CORESET pool index 0, and the transmission power allocation method between PUSCHs is applied accordingly. Similarly, SRS resource set index 1 related to the type 1 CG PUSCH is interpreted as corresponding to CORESET pool index 1, and the transmission power allocation method between PUSCHs is applied accordingly.

FIG. 8 is a flowchart illustrating a power control method when a UE performs STxMP according to the present disclosure.

Referring to FIG. 8, in step A05, the UE determines a first transmission power of a first UL channel based on a first UL grant and determines a second transmission power of a second UL channel based on a second UL grant.

In the present disclosure, it is assumed that the first UL channel and the second UL channel are transmitted simultaneously to a BS. Therefore, in step A10, the UE selects one of the first transmission power and the second transmission power, based on a first CORESET (control resource set) index related to the first UL grant and a second CORESET index related to the second UL grant.

In this case, if at least one of the first UL grant and the second UL grant is a type 1 CG, an SRS resource index related to the UL grant may be considered as a CORESET index related to the corresponding UL grant.

Alternatively, if at least one of the first UL grant and the second UL grant is a type 2 CG, a CORESET index related to the type 2 CG may be the index of a CORESET in which DCI including an activation indicator of the type 2 CG is received.

Alternatively, among the first transmission power and the second transmission power, the transmission power of a UL channel to be transmitted based on a UL grant related to a higher CORESET index between the first CORESET index and the second CORESET index may be selected.

Next, in step A15, the UE reduces the selected transmission power such that the sum of the first transmission power and the second transmission power complies with the maximum transmission power of the UE. If the selected transmission power is reduced to the minimum transmission power, the other transmission power may also be reduced.

Finally, in step A20, the UE transmits the first UL channel to the BS with the first transmission power based on the first UL grant, and simultaneously transmits the second UL channel to the BS with the second transmission power based on the second UL grant.

In the present disclosure, since the entity responsible for UL transmission power control is the BS/TRP, the proposed method has been explained from the perspective of the BS. However, since the UE needs to adjust the transmission power as intended by the BS, the entity applying the proposed method is the UE.

In the present disclosure, for a PUSCH, multiple panels may correspond to multiple SRS resource sets designated for closed-loop/non-closed-loop (CB/NCB) purposes or SRS resources indicated by multiple SRI fields. For example, panel 1 and panel 2 may correspond to SRS resource set 0 and SRS resource set 1, respectively. Alternatively, panel 1 and panel 2 may correspond to SRS resources indicated by first and second SRI fields, respectively. Additionally, multiple panels may correspond to PMIs indicated by multiple transmitter panel modulation indicator (TPMI) fields. For example, panel 1 may correspond to a PMI indicated by a first TPMI field, and panel 2 may correspond to a PMI indicated by a second TPMI field. Additionally, for a PUCCH, multiple panels may correspond to multiple pieces of spatial relation information (SRI) configured for PUCCH resources. For instance, panel 1 may correspond to spatial relation information (or info) 0, and panel 2 may correspond to spatial relation information (or info) 1. Alternatively, to directly indicate panels, a panel ID may be introduced in the standard. Alternatively, multiple panels may correspond to multiple UL TCI states indicated by a unified TCI framework.

Alternatively, a panel may be defined as an antenna port group with coherence. For example, when a 4Tx codebook is configured in the existing standard, PUSCH antenna ports 1000 and 1002 may be defined as panel 1, and PUSCH antenna ports 1001 and 1003 may be defined as panel 2. Similarly, if an 8Tx codebook is introduced in the future, PUSCH antenna ports 1000, 1002, 1004, and 1006 may be defined as panel 1, and PUSCH antenna ports 1001, 1003, 1005, and 1007 may be defined as panel 2. For an NCB PUSCH, a phase tracking reference signal (PT-RS) port index may be configured for each SRS resource, and SRS resources with the same PT-RS port index may be assumed to be transmitted on the same panel.

For the sake of convenience in explanation, the above proposal assumes two STxMP panels, two UL TCI states, and two spatial relation information/RS and PC sets configured for UL M-TRP transmission. However, the two panels, TCI states, and sets may be extended and applied to N1, N2, or N3 panels, TCI states, and sets, respectively.

The above proposals may be finally applied through a combination/aggregation.

The above proposals have been explained based on a PUSCH, but the proposals may also be extended and applied to other channels such as a PUCCH, PDSCH, PDCCH, and so on.

The applicability of the above proposals and the parameters used in the proposals may be provided by the BS to the UE through DCI, MAC-CE, or RRC signaling, or reported by the UE to the BS.

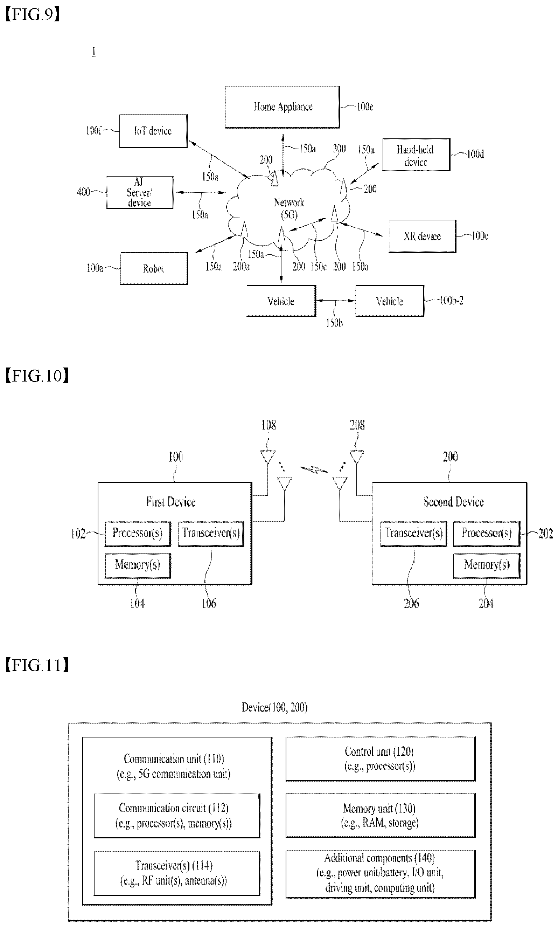

FIG. 9 illustrates an exemplary communication system to which the embodiment is applied.

Referring to FIG. 9, a communication system 1 applied to the embodiment includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the embodiment.

FIG. 10 illustrates exemplary wireless devices to which the embodiment is applicable.

Referring to FIG. 10, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 9.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the embodiment, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the embodiment, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 11 illustrates other exemplary wireless devices to which the embodiment is applied. The wireless devices may be implemented in various forms according to a use case/service (see FIG. 9)

Referring to FIG. 11, wireless devices 100 and 200 may correspond to the wireless devices 100 and 200 of FIG. 10 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 10. For example, the transceiver(s) 114 may include the one or more transceivers 106 and 206 and/or the one or more antennas 108 and 208 of FIG. 10. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 9), the vehicles (100b-1 and 100b-2 of FIG. 9), the XR device (100c of FIG. 9), the hand-held device (100d of FIG. 9), the home appliance (100e of FIG. 9), the IoT device (100f of FIG. 9), a digital broadcast terminal, a hologram device, a public safety device, an MTC device, a medicine device, a fintech device (or a finance device), a security device, a climate/environment device, the AI server/device (400 of FIG. 9), the BSs (200 of FIG. 9), a network node, etc. The wireless device may be used in a mobile or fixed place according to a use-example/service.

In FIG. 11, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

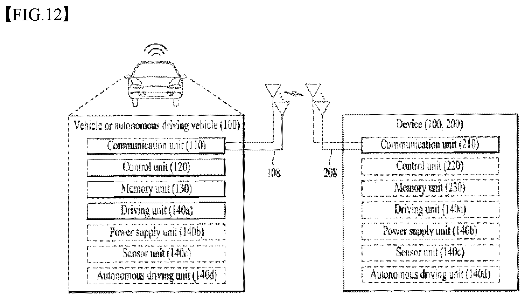

FIG. 12 illustrates an exemplary vehicle or autonomous driving vehicle to which the embodiment. The vehicle or autonomous driving vehicle may be implemented as a mobile robot, a car, a train, a manned/unmanned aerial vehicle (AV), a ship, or the like.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 11 illustrates other exemplary wireless devices to which the embodiment is applied. The wireless devices may be implemented in various forms according to a use case/service. (see FIG. 9)

Referring to FIG. 11, wireless devices 100 and 200 may correspond to the wireless devices 100 and 200 of FIG. 10 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 10. For example, the transceiver(s) 114 may include the one or more transceivers 106 and 206 and/or the one or more antennas 108 and 208 of FIG. 10. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 9), the vehicles (100b-1 and 100b-2 of FIG. 9), the XR device (100c of FIG. 9), the hand-held device (100d of FIG. 9), the home appliance (100e of FIG. 9), the IoT device (100f of FIG. 9), a digital broadcast terminal, a hologram device, a public safety device, an MTC device, a medicine device, a fintech device (or a finance device), a security device, a climate/environment device, the AI server/device (400 of FIG. 9), the BSs (200 of FIG. 9), a network node, etc. The wireless device may be used in a mobile or fixed place according to a use-example/service.

In FIG. 11, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 12 illustrates an exemplary vehicle or autonomous driving vehicle to which the embodiment. The vehicle or autonomous driving vehicle may be implemented as a mobile robot, a car, a train, a manned/unmanned aerial vehicle (AV), a ship, or the like.

Referring to FIG. 12, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 11, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

Those skilled in the art will appreciate that the embodiment may be carried out in other specific ways than those set forth herein without departing from the spirit and essential characteristics of the embodiment. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein. It is obvious to those skilled in the art that claims that are not explicitly cited in each other in the appended claims may be presented in combination as an embodiment or included as a new claim by a subsequent amendment after the application is filed.

It will be apparent to those skilled in the art that the disclosure may be embodied in other specific forms without departing from the scope of the present disclosure. Accordingly, the above detailed description should not be construed as limiting in all respects but should be considered as illustrative. The scope of the disclosure should be determined by a reasonable interpretation of the appended claims, and all changes within the equivalent scope of the present disclosure are intended to be included in the scope of the disclosure.

### INDUSTRIAL APPLICABILITY

The disclosure is applicable to UEs, BSs, or other apparatuses in a wireless mobile communication system.

## Claims

1. A method performed by a user equipment (UE) in a wireless communication system, the method comprising:
determining a first transmission power of a first uplink channel;
determining a second transmission power of a second uplink channel;
transmitting the first uplink channel to a base station (BS) with the first transmission power based on the first uplink grant; and
transmitting the second uplink channel to the BS with the second transmission power based on the second uplink grant,
wherein the method comprises:
based on simultaneous transmission of the first uplink channel and the second uplink channel to the BS, selecting one transmission power from the first transmission power and the second transmission power based on a first control resource set (CORESET) index related to the first uplink grant and a second CORESET index related to the second uplink grant; and
reducing the selected transmission power such that a sum of the first transmission power and the second transmission power complies with a maximum transmission power of the UE.

2. The method of claim 1, wherein based on that at least one of the first uplink grant and the second uplink grant is a type 1 configured grant (CG), a sounding reference signal (SRS) resource index related to a corresponding uplink grant is considered to be a CORESET index related to the corresponding uplink grant.

3. The method of claim 1, wherein based on that at least one of the first uplink grant and the second uplink grant is a type 2 configured grant (CG), a CORESET index related to the type 2 CG is an index of a CORESET in which downlink control information including an activation indicator of the type 2 CG is received.

4. The method of claim 1, wherein among the first transmission power and the second transmission power, a transmission power of an uplink channel to be transmitted based on an uplink grant related to a higher CORESET index between the first CORESET index and the second CORESET index is selected.

5. The method of claim 1, comprising, based on that the selected transmission power is reduced to a minimum transmission power, reducing the other transmission power.

6. A user equipment (UE) in a wireless communication system, the UE comprising:
at least one transceiver;
at least one processor; and
at least one computer memory operably connected to the at least one processor and storing instructions that, when executed, cause the at least one processor to perform operations comprising:
determining a first transmission power of a first uplink channel;
determining a second transmission power of a second uplink channel;
transmitting the first uplink channel to a base station (BS) with the first transmission power based on the first uplink grant; and
transmitting the second uplink channel to the BS with the second transmission power based on the second uplink grant,
wherein the operations comprise:
based on simultaneous transmission of the first uplink channel and the second uplink channel to the BS, selecting one transmission power from the first transmission power and the second transmission power based on a first control resource set (CORESET) index related to the first uplink grant and a second CORESET index related to the second uplink grant; and
reducing the selected transmission power such that a sum of the first transmission power and the second transmission power complies with a maximum transmission power of the UE.

7. The UE of claim 6, wherein based on that at least one of the first uplink grant and the second uplink grant is a type 1 configured grant (CG), a sounding reference signal (SRS) resource index related to a corresponding uplink grant is considered to be a CORESET index related to the corresponding uplink grant.

8. The UE of claim 6, wherein based on that at least one of the first uplink grant and the second uplink grant is a type 2 configured grant (CG), a CORESET index related to the type 2 CG is an index of a CORESET in which downlink control information including an activation indicator of the type 2 CG is received.

9. The UE of claim 6, wherein among the first transmission power and the second transmission power, a transmission power of an uplink channel to be transmitted based on an uplink grant related to a higher CORESET index between the first CORESET index and the second CORESET index is selected.

10. The UE of claim 6, wherein the operations comprise, based on that the selected transmission power is reduced to a minimum transmission power, reducing the other transmission power.

11. A processing device in a wireless communication system, the processing device comprising:
at least one processor; and
at least one computer memory operably connected to the at least one processor and storing instructions that, when executed, cause the at least one processor to perform operations for a user equipment (UE), the operations comprising:
determining a first transmission power of a first uplink channel;
determining a second transmission power of a second uplink channel;
transmitting the first uplink channel to a base station (BS) with the first transmission power based on the first uplink grant; and
transmitting the second uplink channel to the BS with the second transmission power based on the second uplink grant,
wherein the operations comprise:
based on simultaneous transmission of the first uplink channel and the second uplink channel to the BS, selecting one transmission power from the first transmission power and the second transmission power based on a first control resource set (CORESET) index related to the first uplink grant and a second CORESET index related to the second uplink grant; and
reducing the selected transmission power such that a sum of the first transmission power and the second transmission power complies with a maximum transmission power of the UE.

12. A computer-readable storage medium configured to store at least one program code comprising instructions that, when executed, cause at least one processor to perform operations for a user equipment (UE), the operations comprising:
determining a first transmission power of a first uplink channel;
determining a second transmission power of a second uplink channel;
transmitting the first uplink channel to a base station (BS) with the first transmission power based on the first uplink grant; and
transmitting the second uplink channel to the BS with the second transmission power based on the second uplink grant,
wherein the operations comprise:
based on simultaneous transmission of the first uplink channel and the second uplink channel to the BS, selecting one transmission power from the first transmission power and the second transmission power based on a first control resource set (CORESET) index related to the first uplink grant and a second CORESET index related to the second uplink grant; and
reducing the selected transmission power such that a sum of the first transmission power and the second transmission power complies with a maximum transmission power of the UE.
